# EUROPÄISCHE PATENTANMELDUNG

(11) **EP 2 410 702 A1**
(43) Veröffentlichungstag der Anmeldung: **25.01.2012**
(21) Anmeldenummer: 10169436.2
(22) Anmeldetag: 13.07.2010
(51) Int. Cl.: H04L 12/58

(54) **Verfahren zur Übermittelung einer elektronischen Nachricht über ein Kommunikationssystem und zugehöriges Kommunikationssystem**

(71) Anmelder: Deutsche Post AG, 53113 Bonn (DE)
(72) Erfinder: Wittenburg, André Dr., 53177 Bonn (DE)
(74) Vertreter: Jostarndt, Hans-Dieter

(57) **Zusammenfassung**

Die Erfindung betrifft ein Verfahren zur Übermittelung einer elektronischen Nachricht von einem Sender zu einem Empfänger über ein Kommunikationssystem, bei dem die Nachricht Kopfdaten, bestehend aus mehreren Feldern und einen Textkörper, umfasst. Nach Empfangen der Nachricht von dem Sender wird ein erster Hashwert gemäß einem ersten Hash-Algorithmus über wenigstens zwei Felder der Kopfdaten und den Textkörper der Nachricht gebildet und dieser Hashwert signiert. Der so gebildete erste Hashwert und die zugehörige Signatur werden in Feldern der Kopfdaten der Nachricht hinterlegt und der Textkörper der Nachricht anschließend verschlüsselt. Über wenigstens zwei Felder der Kopfdaten und den verschlüsselten Textkörper der verschlüsselten Nachricht wird dann ein weiterer Hashwert gemäß einem zweiten Algorithmus gebildet und der zur Bildung dieses weiteren Hashwerts verwendete zweite Algorithmus sowie die benötigten Parameter werden in den Kopfdaten der verschlüsselten Nachricht hinterlegt und vom Kommunikationssystem mitgeführt.

## Beschreibung

Die Erfindung betrifft ein Verfahren zur Übermittelung einer elektronischen Nachricht von einem Sender zu einem Empfänger über ein Kommunikationssystem, bei dem die Nachricht Kopfdaten, bestehend aus mehreren Feldern und einen Textkörper, umfasst und wenigstens ein Hashwert über diese Kopfdaten und den Textkörper gebildet wird. Der Hashwert kann insbesondere dazu genutzt werden, um eine Nachprüfbarkeit der Integrität der Nachricht zu ermöglichen. Ferner ist eine Verschlüsselung der Nachricht vorgesehen, um ein unbefugtes Lesen der Nachricht zu verhindern.

Die Erfindung betrifft ferner ein zugehöriges Kommunikationssystem zur Durchführung des Verfahrens.

Im Bereich der Übermittelung von elektronischen Dokumenten und insbesondere Nachrichten wie E-Mails ist es oftmals gewünscht oder auch erforderlich, die Sicherheit bei der Übermittelung zu erhöhen, das heißt beispielsweise sicherzustellen, dass die Nachricht nicht von Unbefugten gelesen und/oder verändert wird. Bisherige Lösungen für eine solche authentische, integere und vertrauliche elektronische Kommunikation setzen dabei vielfach auf eine End-to-End-Sicherheit, bei der verschiedene Mechanismen wie beispielsweise die Verschlüsselung und/oder Signatur von Nachrichten angewendet werden können. Dabei signiert und/oder verschlüsselt ein Absender seine Nachricht und der Empfänger entschlüsselt diese und prüft die Signatur.

Bei der Verschlüsselung wird ein Dokumenten- bzw. Nachrichtentext mittels eines Verschlüsselungsverfahrens (Kryptosystems) und ein oder mehrerer Schlüssel in eine Zeichenfolge (Geheimtext) verwandelt, die ohne die zugehörigen Schlüssel nicht leicht zu interpretieren d.h. zu entschlüsseln ist. Dabei können symmetrische oder asymmetrische Verschlüsselungsverfahren verwendet werden. Bei der Signatur eines elektronischen Dokuments wird dieses mit elektronischen Informationen verknüpft, mit denen man den Unterzeichner bzw. Signaturhersteller identifizieren und damit die Integrität der signierten elektronischen Informationen prüfen kann.

Bekannt ist es ferner, spezielle Kommunikationssysteme bereitzustellen, um Nutzern den sicheren Versand von elektronischen Nachrichten zu ermöglichen. Um die Sicherheitsanforderungen bezüglich der Authentifizierung von Nachrichten erfüllen zu können, handelt es sich bei den Nutzern dieser Systeme üblicherweise um registrierte Nutzer, die sich vor Nutzung des Systems eindeutig im System identifiziert haben. Zweckmäßigerweise stellen derartige Kommunikationssysteme umfangreiche Funktionen im Bereich des Identitätsnachweises, der Versandbestätigung und der Empfangsbestätigung für versandte Nachrichten und Dokumente bereit und sollen sich möglichst für den rechtsgültigen Austausch von Nachrichten und Dokumenten zwischen Bürgern, Behörden und Unternehmen über das Internet eignen. In Deutschland wurde dazu beispielsweise das Projekt "Bürgerportal" initiiert, das mit dem Kommunikationsmittel DE-Mail den sicheren Austausch rechtsgültiger elektronischer Dokumente zwischen Bürgern, Behörden und Unternehmen über das Internet ermöglichen soll.

Um die Anforderungen an derartige Systemen erfüllen zu können, müssen die jeweils geforderten Sicherheitsmerkmale insbesondere bezüglich der Integrität und der Verschlüsselung von Nachrichten und die technischen Anforderungen des eingesetzten Kommunikationssystems miteinander vereinbart werden.

Aufgabe der vorliegenden Erfindung ist es dabei, ein Verfahren zur Übermittelung von Nachrichten von einem Sender zu einem Empfänger über ein Kommunikationssystem bereitzustellen, das es ermöglicht, dem Sender sowohl die Integrität einer unverschlüsselten Nachricht als auch die Weiterverarbeitung dieser Nachricht in verschlüsselter Form nachzuweisen.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-14. Die Aufgabe wird ferner durch ein Kommunikationssystem nach Anspruch 15 gelöst.

Das erfindungsgemäße Verfahren beinhaltet die Übermittelung einer elektronischen Nachricht von einem Sender zu einem Empfänger, wobei die Nachricht Kopfdaten, bestehend aus mehreren Feldern und einen Textkörper, umfasst. Nach Empfangen der Nachricht von dem Sender werden von dem Kommunikationssystem wenigstens folgende Schritte durchgeführt:
- Bilden eines ersten Hashwerts gemäß einem ersten Hash-Algorithmus über wenigstens zwei Felder der Kopfdaten und den Textkörper der Nachricht, und Signieren dieses Hashwerts,
- Hinterlegen des so gebildeten ersten Hashwerts und der Signatur dieses ersten Hashwerts in Feldern der Kopfdaten der Nachricht,
- Verschlüsseln des Textkörpers der Nachricht nach der Bildung des ersten Hashwerts gemäß dem ersten Hash-Algorithmus,
- Bilden eines weiteren Hashwerts gemäß einem zweiten Algorithmus über wenigstens zwei Felder der Kopfdaten und den verschlüsselten Textkörper der verschlüsselten Nachricht, und
- Hinterlegen des zur Bildung des weiteren Hashwerts verwendeten zweiten Algorithmus sowie der benötigten Parameter in den Kopfdaten der verschlüsselten Nachricht.

Mit dem erfindungsgemäßen Verfahren ist es möglich, dem Sender mittels des signierten ersten Hashwerts über die ursprünglichen Kopfdaten und den Textkörper der unverschlüsselten Nachricht die Möglichkeit zu geben, die Integrität dieser Nachricht bei der Übermittelung bis zum Empfänger nachzuweisen, was oftmals gefordert ist, wenn der Sender beispielsweise bei der Kommunikation mit einer Behörde einen entsprechenden Nachweis bringen muss. Dieser erste Hashwert wird zusammen mit der zugehörigen Signatur in die Kopfdaten der Nachricht geschrieben und somit mitgeführt. Ergänzend ist es durch den weiteren Hashwert aber auch möglich, die Integrität der verschlüsselten Nachricht an verschiedenen Stationen bei der Übermittelung der Nachricht nachzuweisen, wobei der Algorithmus für die Hashwert-Bildung und die erforderlichen Parameter ebenfalls in der Nachricht mitgeführt werden. Dieser zweite Algorithmus zur Bildung des weiteren Hashwerts wird vorzugsweise in die Nachricht geschrieben, nachdem der weitere Hashwert zum ersten Mal erzeugt wurde. So kann der Algorithmus anschließend an verschiedenen weiteren Stationen bei der Übermittelung der Nachricht aus der Nachricht ausgelesen und der weitere Hashwert stets neu gebildet werden, wodurch sichergestellt ist, dass der weitere Hashwert immer nach dem gleichen Algorithmus gebildet wird und vergleichbar ist.

Vorzugsweise erzeugt das Kommunikationssystem zeitlich zwischen der Hinterlegung des ersten Hashwerts und der Signatur dieses ersten Hashwerts in Feldern der Kopfdaten der Nachricht und der Verschlüsselung des Textkörpers der Nachricht eine Kopie der Nachricht und eine Trägernachricht, wobei diese Kopie der Nachricht zusammen mit dem ersten Hashwert gemäß dem ersten Algorithmus als Anhang der Trägernachricht an den Sender übermittelt wird. Durch diese Belegkopie ist sichergestellt, dass der Sender zu Beginn des Übermittelungsvorgangs eine Kopie der Nachricht in unverschlüsselter Form einschließlich des ersten Hashwerts und seiner Signatur erhält.

In einem Ausführungsbeispiel des Verfahrens erzeugt das Kommunikationssystem nach der Übermittelung der Nachricht an eine nächste Verarbeitungskomponente innerhalb des Kommunikationssystems eine Versandbestätigung, wobei das Kommunikationssystem den weiteren Hashwert gemäß dem zweiten Algorithmus über wenigstens zwei Felder der Kopfdaten und den verschlüsselten Textkörper der verschlüsselten Nachricht bildet und den zur Bildung des weiteren Hashwerts verwendeten zweiten Algorithmus sowie die benötigten Parameter in den Kopfdaten der verschlüsselten Nachricht hinterlegt, und die Versandbestätigung wenigstens den ersten Hashwert und den aktuell gebildeten weiteren Hashwert umfasst. Die Versandbestätigung wird vorzugsweise signiert und als signiertes Dokument an den Sender übermittelt. An dieser Stelle im Übermittelungsprozess kann somit beispielsweise zum ersten Mal die Bildung des weiteren Hashwerts gemäß dem zweiten Algorithmus erfolgen, woraufhin der dafür verwendete zweite Algorithmus und die erforderlichen Parameter in den Kopfdaten der Nachricht ergänzt und mitgeführt werden. So steht der zukünftig zu verwendende zweite Algorithmus für weitere Bildungen des weiteren Hashwerts an folgenden Verarbeitungsstationen zur Verfügung.

In einem Ausführungsbeispiel des erfindungsgemäßen Verfahrens erzeugt das Kommunikationssystem nach der Übermittelung der Nachricht an den Empfänger ferner eine Zustellbestätigung, wobei das Kommunikationssystem nun aus der übermittelten Nachricht den zweiten Algorithmus und die erforderlichen Parameter zur Bildung des weiteren Hashwerts gemäß dem zweiten Algorithmus ausliest und gemäß diesem zweiten Algorithmus und der erforderlichen Parameter erneut einen aktuellen weiteren Hashwert über wenigstens zwei Felder der Kopfdaten und den Textkörper der übermittelten Nachricht bildet, und die Zustellbestätigung wenigstens den ersten Hashwert und den aktuell gebildeten weiteren Hashwert umfasst. Vorzugsweise wird auch die Zustellbestätigung signiert und als signiertes Dokument an den Sender übermittelt. An dieser Stelle im Übermittelungsprozess kann somit beispielsweise zum zweiten Mal die Bildung des weiteren Hashwerts gemäß dem zweiten Algorithmus erfolgen, wobei auf den in der Nachricht hinterlegten Algorithmus zurückgegriffen wird und somit sichergestellt ist, dass der Hashwert an dieser Station genauso gebildet wird wie beispielsweise bei der Erzeugung der Versandbestätigung.

In einem weiteren Ausführungsbeispiel der Erfindung ist vorgesehen, dass die Annahme oder Ablehnung der Nachricht durch den Empfänger ein Annahme- oder Ablehnungssignal an das Kommunikationssystem auslöst, welches daraufhin eine Annahme- oder Ablehnungsbestätigung erzeugt. Dabei liest das Kommunikationssystem aus der angenommenen oder abgelehnten Nachricht erneut den zweiten Algorithmus und die erforderlichen Parameter zur Bildung des weiteren Hashwerts gemäß dem zweiten Algorithmus aus, und gemäß diesem zweiten Algorithmus und der erforderlichen Parameter wird erneut ein aktueller weiterer Hashwert über wenigstens zwei Felder der Kopfdaten und den Textkörper der angenommenen oder abgelehnten Nachricht gebildet, wobei die Annahme- oder Ablehnungsbestätigung wenigstens den ersten Hashwert und den aktuell gebildeten weiteren Hashwert umfasst. Auch die Annahme- oder Ablehnungsbestätigung wird vorzugsweise signiert und als signiertes Dokument an den Sender übermittelt. An dieser Stelle im Übermittelungsprozess kann somit erneut die Bildung des weiteren Hashwerts gemäß dem zweiten Algorithmus erfolgen, wobei wieder auf den in der Nachricht hinterlegten Algorithmus zurückgegriffen wird und somit sichergestellt ist, dass der Hashwert an dieser Station genauso gebildet wird wie beispielsweise bei der Erzeugung der Versandbestätigung oder der Zustellbestätigung.

Vorzugsweise wird der weitere Hashwert gemäß dem zweiten Algorithmus wenigstens über das Feld der Kopfdaten gebildet, welches den ersten Hashwert gemäß dem ersten Algorithmus enthält. Ergänzend oder alternativ kann der weitere Hashwert gemäß dem zweiten Algorithmus auch wenigstens über das Feld der Kopfdaten gebildet werden, welches die Signatur des ersten Hashwerts gemäß dem ersten Algorithmus enthält. In einem weiteren Ausführungsbeispiel der Erfindung wird nach der Signierung des ersten Hashwerts gemäß dem ersten Algorithmus das für diese Signierung verwendete Zertifikat in einem Feld der Kopfdaten der Nachricht hinterlegt, und der weitere Hashwert gemäß dem zweiten Algorithmus wird wenigstens über das Feld der Kopfdaten gebildet, welches dieses Zertifikat enthält.

Bei der Verschlüsselung des Textkörpers der Nachricht kann vorgesehen sein, dass dieser mit einem zufälligen symmetrischen Schlüssel des Kommunikationssystems verschlüsselt wird, dieser zufällige symmetrische Schlüssel des Kommunikationssystems mit wenigstens einem öffentlichen Schlüssel verschlüsselt wird und der verschlüsselte symmetrische Schlüssel in die Nachricht integriert wird. Der zufällige symmetrische Schlüssel des Kommunikationssystems kann dabei mit wenigstens einem öffentlichen Schlüssel des gleichen Kommunikationssystems oder eines anderen Kommunikationssystems verschlüsselt werden.

Von der Erfindung umfasst ist ferner ein Kommunikationssystem zur Übermittelung einer elektronischen Nachricht von einem Sender zu einem Empfänger, das computerprogrammierte Komponenten und Mittel aufweist, die dazu ausgebildet sind, das erfindungsgemäße Verfahren durchzuführen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Darstellung des Einsatzes eines Kommunikationssystems für das erfindungsgemäße Verfahren;
- Fig. 2: ein Ablaufdiagramm der wesentlichen Schritte des erfindungsgemäßen Verfahrens;
- Fig. 3: ein Ablaufdiagramm der wesentlichen Schritte bei der Verschlüsselung einer Nachricht;
- Fig. 4: ein Ablaufdiagramm der wesentlichen Schritte bei der Bildung einer Belegkopie für den Sender;
- Fig. 5: ein Ablaufdiagramm der wesentlichen Schritte bei der Erzeugung einer Versandbestätigung für den Sender;
- Fig. 6: ein Ablaufdiagramm der wesentlichen Schritte bei der Erzeugung einer Zustellbestätigung für den Sender; und
- Fig. 7: ein Ablaufdiagramm der wesentlichen Schritte bei der Erzeugung einer Annahme-/Ablehnungsbestätigung für den Sender.

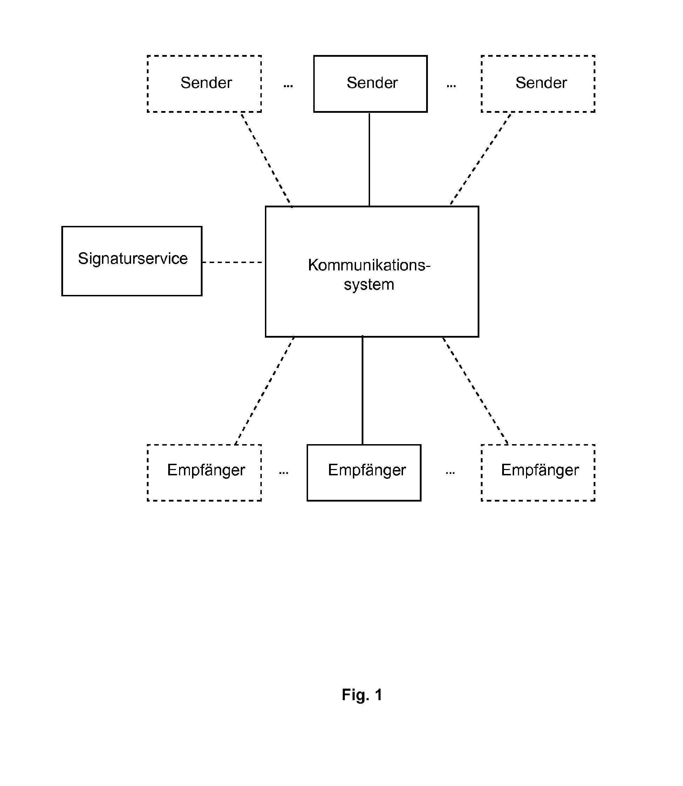

Fig. 1 zeigt eine schematische Darstellung des Einsatzes eines Kommunikationssystems für das erfindungsgemäße Verfahren. Dabei steht das Kommunikationssystem in Verbindung mit einem Sender einer elektronischen Nachricht und wenigstens einem Empfänger dieser Nachricht. Da eine elektronische Nachricht wie beispielsweise eine E-Mail auch mehrere Empfänger haben kann, die beispielsweise als ergänzende TO-Adressaten, CC-Adressaten oder BCC-Adressaten in der Nachricht enthalten sind, sind diese in Fig. 1 beispielhaft gestrichelt dargestellt. Zum anderen können natürlich mehrere Sender Nachrichten über das Kommunikationssystem versenden, so dass diese beispielhaft ebenfalls gestrichelt dargestellt sind. Die Funktion der Sender und Empfänger kann ferner auch wechseln, so dass Empfänger zu Sendern einer Nachricht werden können und umgekehrt.

Bei den Nutzern des Kommunikationssystems, die als Sender und Empfänger von elektronischen Nachrichten auftreten können, handelt es sich vorzugsweise um registrierte Nutzer, deren Identität dem Kommunikationssystem somit eindeutig nachgewiesen wurde. Der Identitätsnachweis kann beispielsweise über einen elektronischen Personalausweis oder ein postalisches Ident-Verfahren erfolgt sein, wie es in Deutschland von der Anmelderin angeboten wird.

Das Kommunikationssystem wird vorzugsweise durch ein E-Mail-System gebildet, das für Sender und Empfänger über eine Web-Site zugänglich ist. In dieser Ausführungsform des Kommunikationssystems werden den Nutzern des Systems über die Web-Site alle Funktionalitäten des E-Mail-Systems bereitgestellt, so dass diese über die Web-Site E-Mails erstellen, abrufen, speichern, etc. können, wobei die Darstellung beispielsweise einem üblichen E-Mail-Client entspricht. Für den Zugang zu dem Kommunikationssystem ist vorzugsweise wenigstens ein Passwort erforderlich. Um den Identitätsnachweis bei Benutzung des Kommunikationssystems zu erhöhen, können Identitätsverfahren über mehrere Kanäle eingesetzt werden. Beispielsweise kann es vorgesehen sein, dass ein Nutzer für einen Zugang zu dem Kommunikationssystem einen Zugangscode über einen zweiten Kanal auf sein Mobiltelefon übermittelt bekommt, den der Nutzer auf der Web-Site eingeben muss. Eine solche Übermittelung eines Codes auf das Mobilfunktelefon eines Nutzers kann auch für einzelne Aktionen innerhalb des Kommunikationssystems genutzt werden, welche einen erhöhten Identitätsnachweis erfordern. So ist sichergestellt, dass der Nutzer zum einen ein Passwort kennt, aber auch im Besitz des Mobilfunktelefons des autorisierten Nutzers ist.

Das Kommunikationssystem kann auch aus mehreren einzelnen Teil-Kommunikationssystemen bestehen, die miteinander kommunizieren und/oder deren Funktionalitäten sich ergänzen. Ferner steht das Kommunikationssystem vorzugsweise in Verbindung mit einem Signaturservice beispielsweise in Form eines Trustcenters eines Dienstleisters. Ein solcher Dienstleister übernimmt bei der elektronischen Kommunikation des Kommunikationssystems mit seinen Nutzern im Zusammenhang mit elektronischen Signaturen die Rolle des Trustcenters, welches Zertifikate ausstellt, anhand derer die Identität der Kommunikationspartner bescheinigt werden kann.

Die über das Kommunikationssystem übermittelten elektronischen Nachrichten wie E-Mails bestehen üblicherweise aus einem Umschlag (Envelope) und dem Inhalt (Content). Der Inhalt teilt sich wiederum auf in die Kopfdaten (Header) und den Textkörper (Body). Der Envelope stellt den digitalen Umschlag der elektronischen Nachricht dar, und in ihm finden sich üblicherweise die Namen von Absender und Empfänger der Nachricht, die für die Organisation der Nachrichtenübermittelung verwendet werden. Die Kopfdaten der Nachricht bestehen aus mehreren Feldern, die wenigstens Angaben wie Absender, Empfänger, Datum der Nachricht und die Namen der Mailstationen, die bei der Übermittelung beteiligt waren, umfassen. Im Gegensatz zu den Einträgen im Umschlag dienen diese Einträge jedoch nicht der Organisation der Nachrichtenübermittelung, sondern der Information des Empfängers. Jedes Kommunikationssystem wie beispielsweise ein Mailserver, über den die Nachricht im Internet transportiert wird, kann diese Einträge verändern bzw. ergänzen. Auch das Verfahren gemäß der Erfindung sieht bei der Übermittelung einer elektronischen Nachricht durch das Kommunikationssystem eine Ergänzung der Kopfdaten einer elektronischen Nachricht vor, die dann insbesondere vom Sender der Nachricht für verschiedene Nachweise genutzt werden kann. Diese Ergänzungen beinhalten sowohl wenigstens einen zu der Nachricht gebildeten Hashwert, um die Integrität der Nachricht nachzuweisen als auch digitale Signaturen und Zertifikate für einen Identitätsnachweis.

Bei der Signatur handelt es sich um ein elektronisches Dokument beigefügte oder logisch mit ihm verknüpfte Daten, die zur Authentifizierung dienen. Die elektronische Signatur erfüllt dabei im Wesentlichen den gleichen Zweck wie eine eigenhändige Unterschrift auf einem Papierdokument, wobei sich der Beweiswert eines elektronischen Dokuments nach der Art der Signatur richtet. Derzeit wird insbesondere zwischen elektronischen Signaturen, fortgeschrittenen elektronischen Signaturen und qualifizierten elektronischen Signaturen unterschieden, an die beispielsweise von der europäischen Gesetzgebung unterschiedliche Anforderungen hinsichtlich Erstellung von Signaturschlüsseln zur Signaturerstellung und Signaturprüfschlüsseln sowie Zertifikaten gestellt werden und die unterschiedliche Beweiskraft haben. An qualifizierte elektronische Signaturen werden die höchsten Anforderungen gestellt, wobei lediglich auf digitalen Signaturen basierende Signaturen die Anforderungen für fortgeschrittene und qualifizierte elektronische Signaturen erfüllen.

Der Textkörper der elektronischen Nachricht enthält die eigentliche Nachricht einschließlich angehängter Dateien. Erfindungsgemäß wird wenigstens der Textkörper der Nachricht für die Übermittelung der Nachricht vom Sender zum Empfänger verschlüsselt, um ein unbefugtes Lesen der Nachricht zu verhindern.

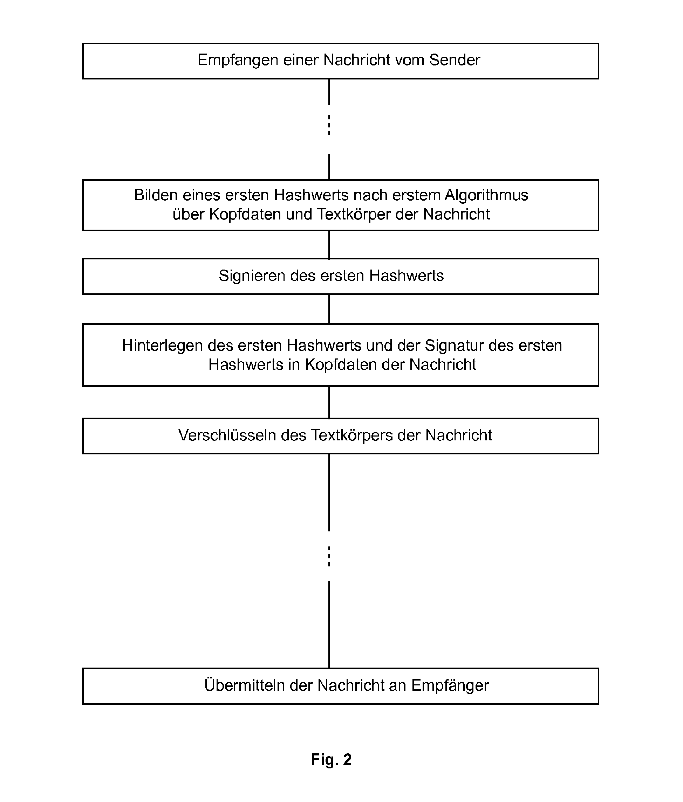

Anhand des Ablaufdiagramms in Fig. 2 sollen die wesentlichen Schritte des erfindungsgemäßen Verfahrens und vorteilhafte Ausführungsformen davon erläutert werden. Das Verfahren beginnt bei Erhalt einer elektronischen Nachricht von einem Sender durch das Kommunikationssystem. Diese Nachricht kann über eine Web-Site erstellt und gesendet worden sein, oder die Nachricht wurde auf einem anderen Kanal in das Kommunikationssystem gespeist. Beispielsweise ist es möglich, dass das Kommunikationssystem direkt an das E-Mail-Programm bzw. den Mailserver eines Senders angeschlossen ist und auf diesem Wege mit Nachrichten aus dem E-Mail-Programm des Senders gespeist wird. Möglich ist es auch, dass das Kommunikationssystem eine elektronische Nachricht von einem anderen Kommunikationssystem erhält.

In Fig. 2 nicht bzw. gestrichelt dargestellt sind optionale Schritte der Vorverarbeitung der Nachricht durch das Kommunikationssystem oder eine andere Komponente nach dem Empfangen der Nachricht. Beispielsweise kann eine eingehende Nachricht vor der eigentlichen Verarbeitung vorzugsweise auf doppelte Empfänger (TO-Adresse und CC-Adresse) und BCC-Adressen geprüft werden. Zweckmäßigerweise werden aus Nachrichten mit mehreren Empfängern und/oder BCC-Adressen mehrere Nachrichten mit einer eigenen Nachrichten-ID (Message ID) generiert, wobei es jedoch auch vorgesehen sein kann, dass für TO-Empfänger und CC-Empfänger eine einzige Nachricht erzeugt wird, während für BCC-Empfänger jeweils eine eigene Nachricht erzeugt wird, da Informationen zu einem solchen BCC-Empfänger nicht an alle anderen Empfänger gesendet werden sollen (BCC = Blind Carbon Copy). Dieser Prozess kann jedoch auch vom Sender oder seinem Mail-Server beeinflusst werden, wenn dieser eine Nachricht mit BCC-Empfängern bereits selbst in mehrere Nachrichten aufteilt und diese einzeln an das Kommunikationssystem übergibt, so dass die resultierenden Nachrichten gegebenenfalls die gleiche Nachrichten-ID haben können. Dabei kann ferner vorgesehen sein, dass die Kopfdaten der Nachricht bereits angepasst werden, damit in einer Nachricht an einen TO-Empfänger und/oder einen CC-Empfänger beispielsweise die BCC-Empfänger in den Kopfdaten gelöscht werden. Nach dieser optionalen Vorverarbeitung wird das erfindungsgemäße Verfahren vorzugsweise für jede so erzeugte Nachricht durchgeführt.

Das erfindungsgemäße Verfahren sieht vor, dass von dem Kommunikationssystem über die bisher unverschlüsselte Nachricht ein erster Hashwert gemäß einem ersten Algorithmus gebildet wird. Dabei wird dieser erste Hashwert über wenigstens zwei Felder der Kopfdaten (Header) der Nachricht und den Textkörper gebildet. Die Header, welche in den ersten Hashwert eingehen, umfassen beispielsweise wenigstens den Sender (FROM), das Datum der Nachricht (DATE), die Nachrichten-ID (MESSAGE ID), den Betreff (SUBJECT) und die Antwortadresse (REPLY-TO). Ergänzend können Header für weitere Informationen vorgesehen sein und in den ersten Hashwert einfließen, wobei es sich beispielsweise um Angaben zum Authentisierungsniveau und/oder zu Empfangsbescheinigungen wie Einschreibe/Rückschein-Funktionen handeln kann. Abhängig von den an das Kommunikationssystem gestellten Anforderungen und den zu erfüllenden Kriterien kann der erste Hashwert somit auch über weitere Header gebildet werden.

Die Bildung des ersten Hashwerts kann in Anlehnung an das DKIM-Verfahren (DKIM-Domain Keys Identified Mail) erfolgen, wobei vorzugsweise die Hashfunktionen SHA-1 und SHA-256 und der Standard RFC 4871 Verwendung finden. Der so gebildete erste Hashwert wird durch das Trustcenter vorzugsweise qualifiziert signiert, und sowohl der erste Hashwert als auch die Signatur werden in die Kopfdaten der Nachricht geschrieben und vom Kommunikationssystem bei der weiteren Verarbeitung der Nachricht mitgeführt. Ergänzend wird vorzugsweise das für die Signatur verwendete Zertifikat in einen Header der Nachricht geschrieben und ebenfalls mitgeführt.

Nach der Bildung des ersten Hashwerts und der Ergänzung der Kopfdaten der Nachricht wird der Textkörper der Nachricht mit den neuen Kopfdaten verschlüsselt, was beispielsweise mittels des Standards S/MIME (Secure/Multipurpose Internet Mail Extensions) oder dem Programm PGP (Pretty Good Privacy) erfolgen kann. Mit oder ohne weitere Zwischenschritte erfolgt dann eine Übermittelung der so verarbeiteten Nachricht an den Empfänger.

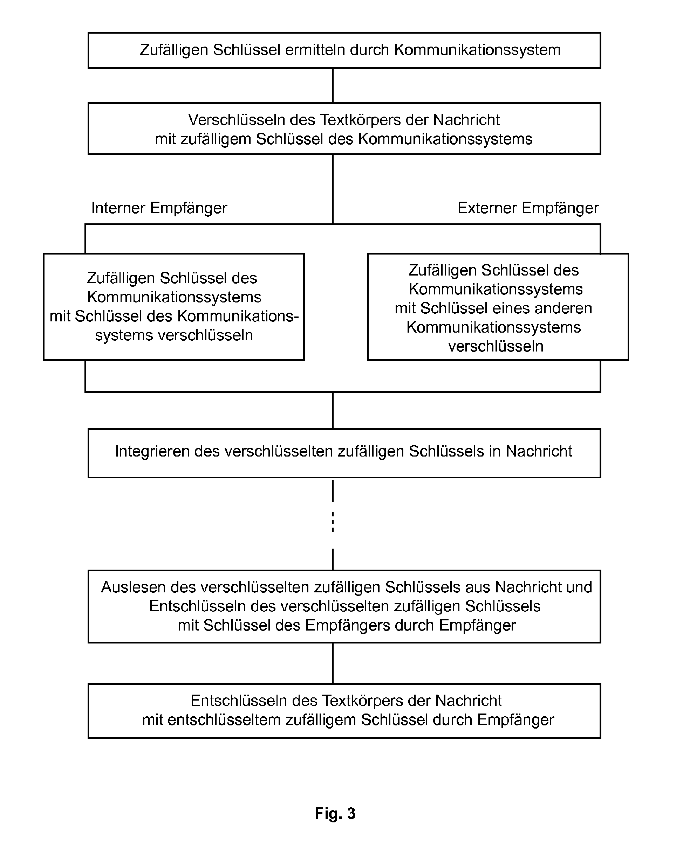

Die Schritte bei der Verschlüsselung der Nachricht sollen beispielhaft anhand des Ablaufdiagramms des Fig. 3 erläutert werden. In diesem Ausführungsbeispiel der Erfindung erfolgt die Verschlüsselung des Textkörpers der Nachricht mit einem zufällig gewählten Schlüssel des Kommunikationssystems, bei dem es sich um einen symmetrischen Schlüssel (SYM) handelt. Dieser symmetrische Schlüssel wird mit einem öffentlichen Schlüssel des Empfängers verschlüsselt und der so verschlüsselte zufällige Schlüssel (aSYM) in die Nachricht integriert. Die Nachricht besteht dann somit aus einem symmetrisch verschlüsselten Textkörper und einer Liste von asymmetrisch verschlüsselten Schlüsseln (aSYMs), die den Empfänger in die Lage versetzen, den zufälligen Schlüssel des Kommunikationssystems zu entschlüsseln und diesen dann für die Entschlüsselung des Textkörpers der Nachricht einzusetzen.

Dabei kann sich der zu verwendende öffentliche Schlüssel des Empfängers auf verschiedene Weise ergeben, wenn der Empfänger beispielsweise ein interner Empfänger des Kommunikationssystems oder ein externer Empfänger außerhalb des Kommunikationssystems ist. Bei einem Empfänger, der registrierter Nutzer des Kommunikationssystems ist und eine Nachricht über das Web-Portal des Kommunikationssystems abrufen würde, handelt es sich beispielsweise um einen internen Empfänger im Sinne der Erfindung, bei dem der zufällig gewählte Schlüssel mit einem internen öffentlichen Schlüssel des Portals (des Kommunikationssystems) verschlüsselt werden könnte. Handelt es sich bei dem Empfänger um einen externen Empfänger mit einem eigenen Kommunikationssystem, in welches die Nachricht eingespeist wird, kann es dagegen vorgesehen sein, dass der zufällig gewählte Schlüssel SYM mit einem öffentlichen Schlüssel dieses im Sinne der Erfindung externen Kommunikationssystems verschlüsselt wird. In beiden Fällen verfügen das Portal und das externe Kommunikationssystem über den erforderlichen öffentlichen Schlüssel, um den zufälligen symmetrischen Schlüssel zu entschlüsseln und damit auch den Textkörper zu entschlüsseln.

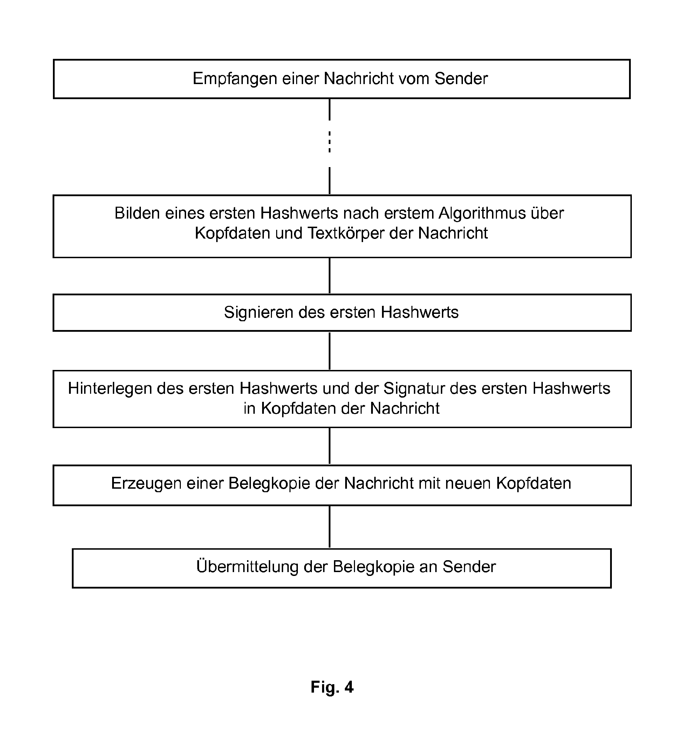

Nach der Bildung des ersten Hashwerts und dem Ergänzen des ersten Hashwerts und seiner Signatur in den Kopfdaten der Nachricht, aber noch vor der Verschlüsselung, der Nachricht wird dem Sender vorzugsweise eine Belegkopie der unverschlüsselten Nachricht übermittelt, wie es anhand des Ablaufdiagramms in Fig. 4 erläutert werden soll. Für die noch unverschlüsselte aber um neue Kopfdaten in Form des ersten Hashwerts und der Signatur dieses ersten Hashwerts ergänzte Nachricht wird dabei eine Kopie dieser Nachricht erzeugt und an eine Trägernachricht angehängt. Diese Trägernachricht wird dem Sender übermittelt. Der Sender kann jedoch auch ein anderes Ziel vorgeben, an welches die Belegkopie übermittelt werden soll. Beispielsweise kann ein Sender ein Archivierungssystem betreiben, an das die Belegkopie gesendet bzw. in das die Belegkopie direkt importiert werden soll.

Nach der Verschlüsselung wird mit einem zweiten Algorithmus ein weiterer Hashwert über die neuen Kopfdaten und den Textkörper der verschlüsselten Nachricht gebildet, welcher dem Sender zu verschiedenen Gelegenheiten mitgeteilt werden kann, um die Integrität der nun verschlüsselten Nachricht prüfen zu können. Dieser weitere Hashwert muss jedoch nicht zwingend wie der erste Hashwert qualifiziert signiert werden und muss auch nicht in die Kopfdaten der Nachricht geschrieben werden. Der weitere Hashwert gemäß dem zweiten Algorithmus wird somit nicht vom Kommunikationssystem in der Nachricht mitgeführt, sondern aktuell an verschiedenen Verarbeitungsstationen im Prozess neu gebildet.

Der weitere Hashwert gemäß dem zweiten Algorithmus wird dabei vorzugsweise über mehr Felder der Kopfdaten der Nachricht gebildet als der erste Hashwert. Insbesondere wird er auch über den in die Header der Nachricht eingetragenen ersten Hashwert und die zugehörige Signatur gebildet. Dieser weitere Hashwert ist erforderlich, um die Integrität der Nachricht im Kommunikationssystem nach der Verschlüsselung zu gewährleisten, da sich der erste Hashwert gemäß dem ersten Hashwert nur auf die unverschlüsselte Nachricht bezieht, die Nachricht aber im weiteren Verarbeitungsprozess nur noch in verschlüsselter Form vorliegt. Durch den weiteren Hashwert über die verschlüsselte Nachricht kann jedoch vom Kommunikationssystem an verschiedenen Stationen im folgenden Verarbeitungsprozess bestätigt werden, dass eine Nachricht mit dem ersten Hashwert X und dem weiteren Hashwert Y an dieser Stelle im Prozess vorlag.

Dabei wird der weitere Hashwert aktuell an verschiedenen Stellen im Verarbeitungsprozess neu nach einem festen Algorithmus gebildet und kann dann mit anderen weiteren Hashwerten gemäß dem zweiten Algorithmus, die zu anderen Zeitpunkten für diese Nachricht gebildet wurden, verglichen werden. Stimmen diese weiteren Hashwerte gemäß dem zweiten Algorithmus überein, handelt es sich um die gleiche verschlüsselte Nachricht, deren Integrität somit an verschiedenen Stationen im Verarbeitungsprozess bestätigt werden kann.

Hierzu muss jedoch sichergestellt werden, dass der weitere Hashwert an den verschiedenen Stationen im Verarbeitungsprozess immer gleich gebildet wird. Dies wird erfindungsgemäß durch das Mitführen des zugehörigen zweiten Algorithmus und der erforderlichen Parameter in den Kopfdaten der Nachricht erreicht.

Dieser zweite Algorithmus und die erforderlichen Parameter werden vorzugsweise ab dem Zeitpunkt in der Kopfdaten der Nachricht mitgeführt, an dem der weitere Hashwert zum ersten Mal mit diesem Algorithmus gebildet wurde. So können der Algorithmus und die erforderlichen Parameter anschließend an den verschiedenen Stationen im Verarbeitungsprozess aus der Nachricht ausgelesen und der weitere Hashwert aktuell gemäß dem ausgelesenen zweiten Algorithmus erzeugt werden.

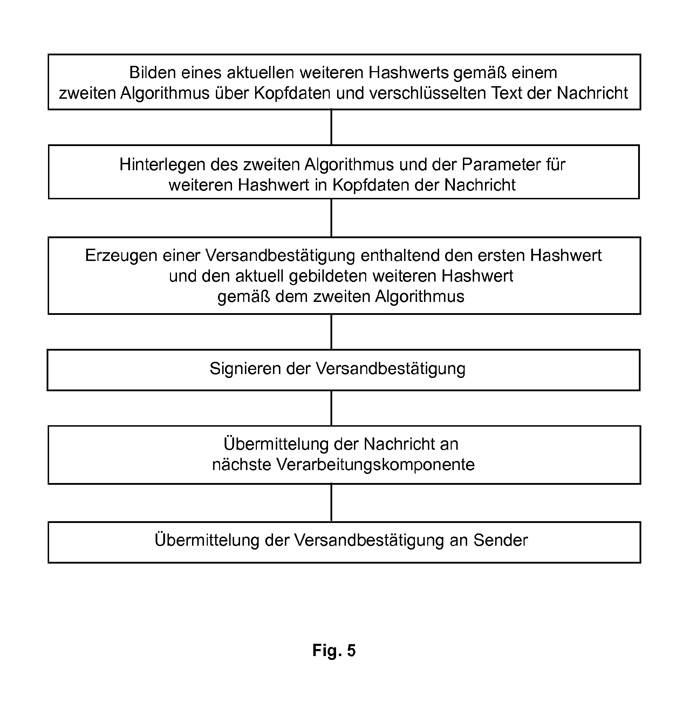

Die Verwendung des weiteren Hashwerts beispielsweise bei der Erzeugung einer Versandbestätigung soll beispielhaft anhand des Ablaufdiagramms in Fig. 5 erläutert werden, wobei die Versandbestätigung nicht nur beim wirklichen Versand der Nachricht an den Empfänger erzeugt und an den Sender versendet werden kann, sondern auch bei Übergabe der Nachricht an die nächste Verarbeitungsstation, welche die weiteren Schritte veranlasst. Die Versandbestätigung kann dabei auch bereits erzeugt und erst zu einem späteren Zeitpunkt wirklich an den Sender übermittelt werden, wenn der weitere Versand sichergestellt ist.

Zur Erzeugung der Versandbestätigung werden der zweite Algorithmus und die erforderlichen Parameter aus der verschlüsselten Nachricht ausgelesen und der gemäß diesem zweiten Algorithmus wird ein weiterer Hashwert über die entsprechenden Kopfdaten und den verschlüsselten Textkörper der Nachricht gebildet. Die Versandbestätigung enthält dann einen beliebigen Text, mit dem bestätigt wird, dass die Nachricht angenommen wurde und versendet wird und enthält zusätzlich erneut den ersten Hashwert gemäß dem ersten Algorithmus und den aktuell gebildeten weiteren Hashwert gemäß dem zweiten Algorithmus. Diese Versandbestätigung wird vorzugsweise qualifiziert vom Trustcenter signiert und als qualifiziert signiertes Dokument (z.B. PDF=Portable Document Format) an den Sender übermittelt. Dabei kann vorgesehen sein, dass die Versandbestätigung zu einem früheren Zeitpunkt erzeugt und dem Sender erst dann übermittelt wird, wenn die Nachricht der nächsten Verarbeitungsstufe übergeben wurde, d.h. sichergestellt ist, dass die Nachricht auch versendet wird.

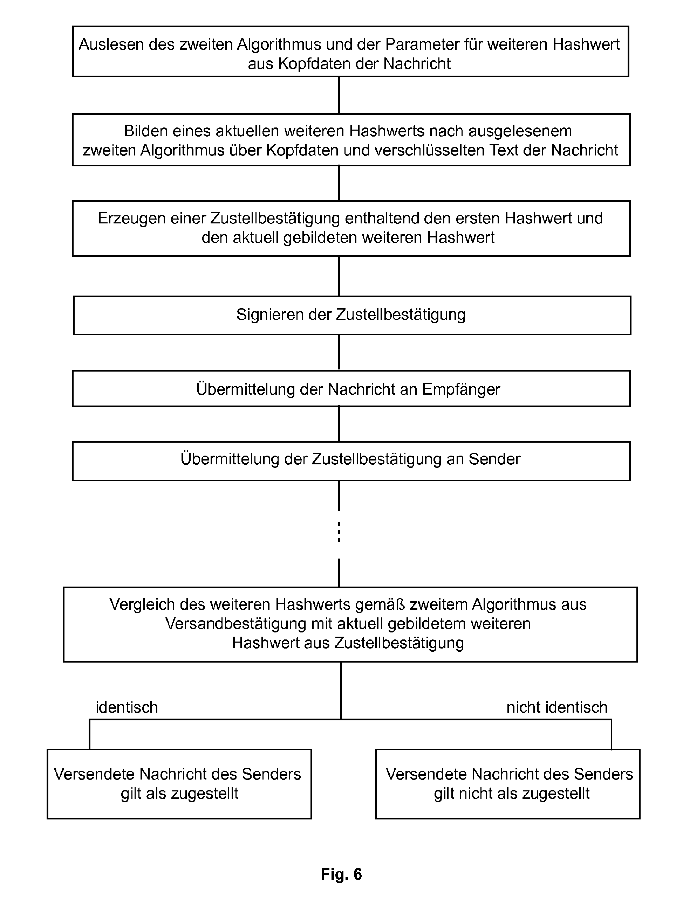

Im weiteren Verarbeitungsprozess wird ferner beispielsweise eine Zustellbestätigung erzeugt, wenn die Nachricht dem Empfänger wirklich zugestellt wurde, was beispielhaft anhand des Ablaufdiagramms in Fig. 6 erläutert werden soll. An dieser Station im Verarbeitungsprozess werden erneut der zweite Algorithmus und die erforderlichen Parameter aus den Kopfdaten der Nachricht ausgelesen und der weitere Hashwert erneut aktuell über die entsprechenden Kopfdaten und den verschlüsselten Textkörper gebildet. Die Zustellbestätigung enthält dann ebenfalls einen beliebigen Text, mit dem bestätigt wird, dass die Nachricht zugestellt wurde und enthält zusätzlich erneut den ersten Hashwert gemäß dem ersten Algorithmus und den aktuell gebildeten weiteren Hashwert gemäß dem zweiten Algorithmus. Diese Zustellbestätigung wird vorzugsweise qualifiziert vom Trustcenter signiert und als qualifiziert signiertes Dokument (z.B. PDF) an den Sender übermittelt. Dabei kann auch hier vorgesehen sein, dass die Zustellbestätigung zu einem früheren Zeitpunkt erzeugt und dem Sender erst dann übermittelt wird, wenn die Nachricht dem Empfänger zugestellt wurde. Da dem Sender nun der weitere Hashwert der Versandbestätigung und der weitere Hashwert der Zustellbestätigung vorliegen, könnten diese im Bedarfsfall verglichen werden und sollten übereinstimmen. Liegt eine Übereinstimmung vor, bestätigt dies zusammen mit dem ersten Hashwert der unverschlüsselten Nachricht, dass die zugestellte Nachricht der Nachricht entspricht, für die eine Versandbestätigung bzw. eine Belegkopie erstellt wurde.

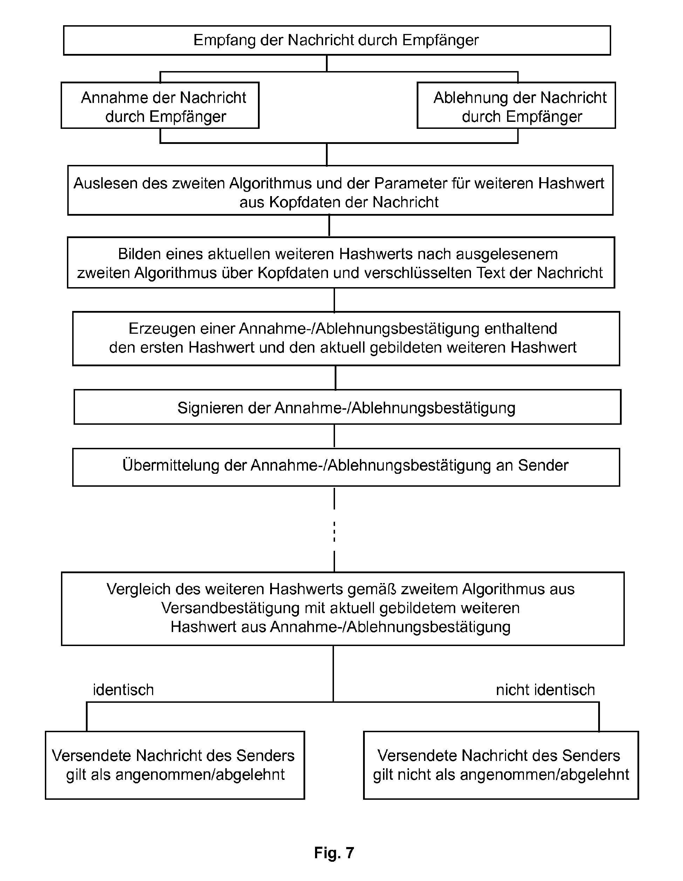

Der gleiche Vorgang kann bei einer Annahme oder Ablehnung der Nachricht durch den Empfänger erfolgen, wenn hierzu eine Annahme-/Ablehnungsbestätigung erzeugt und an den Sender übermittelt werden soll, wie es beispielhaft anhand des Ablaufdiagramms in Fig. 7 erläutert werden soll. Nimmt der Empfänger die Nachricht an, was z.B. automatisch beim Öffnen der Nachricht erfolgen kann oder durch eine entsprechende Willenserklärung (z.B. Button), wird eine Annahmebestätigung erzeugt. Lehnt er die Annahme der Nachricht dagegen ab, wird eine entsprechende Ablehnungsbestätigung erzeugt. Die Annahme oder die Ablehnung erzeugen somit eine Art Annahme- oder Ablehnungssignal für das Kommunikationssystem.

An dieser Station im Verarbeitungsprozess werden dann erneut der zweite Algorithmus und die erforderlichen Parameter aus den Kopfdaten der Nachricht ausgelesen und der weitere Hashwert erneut aktuell über die entsprechenden Kopfdaten und den verschlüsselten Textkörper gebildet. Die Annahme-/ Ablehnungsbestätigung enthält dann einen beliebigen Text, mit dem bestätigt wird, dass die Nachricht vom Empfänger angenommen oder abgelehnt wurde und enthält zusätzlich erneut den ersten Hashwert gemäß dem ersten Algorithmus und den aktuell gebildeten weiteren Hashwert gemäß dem zweiten Algorithmus. Diese Annahme-/Ablehnungsbestätigung wird qualifiziert vom Trustcenter signiert und als qualifiziert signiertes Dokument (z.B. PDF) an den Sender übermittelt. Da dem Sender nun der weitere Hashwert der Annahme-/Ablehnungsbestätigung und der weitere Hashwert der Zustellbestätigung vorliegen, könnten diese im Bedarfsfall verglichen werden und sollten übereinstimmen. Liegt eine Übereinstimmung vor, bestätigt dies zusammen mit dem ersten Hashwert der unverschlüsselten Nachricht, dass die angenommene oder abgelehnte Nachricht der Nachricht entspricht, für die eine Versandbestätigung bzw. eine Belegkopie erstellt wurde.

## Patentansprüche

1. Verfahren zur Übermittelung einer elektronischen Nachricht von einem Sender zu einem Empfänger über ein Kommunikationssystem, bei dem die Nachricht Kopfdaten, bestehend aus mehreren Feldern und einen Textkörper, umfasst und von dem Kommunikationssystem nach Empfangen der Nachricht von dem Sender wenigstens folgende Schritte durchgeführt werden:
- Bilden eines ersten Hashwerts gemäß einem ersten Hash-Algorithmus über wenigstens zwei Felder der Kopfdaten und den Textkörper der Nachricht, und Signieren dieses Hashwerts,
- Hinterlegen des so gebildeten ersten Hashwerts und der Signatur dieses ersten Hashwerts in Feldern der Kopfdaten der Nachricht,
- Verschlüsseln des Textkörpers der Nachricht nach der Bildung des ersten Hashwerts gemäß dem ersten Hash-Algorithmus,
- Bilden eines weiteren Hashwerts gemäß einem zweiten Algorithmus über wenigstens zwei Felder der Kopfdaten und den verschlüsselten Textkörper der verschlüsselten Nachricht, und
- Hinterlegen des zur Bildung des weiteren Hashwerts verwendeten zweiten Algorithmus sowie der benötigten Parameter in den Kopfdaten der verschlüsselten Nachricht.

2. Verfahren nach Anspruch 1,
**dadurch gekennzeichnet,**
**dass** das Kommunikationssystem zeitlich zwischen der Hinterlegung des ersten Hashwerts und der Signatur dieses ersten Hashwerts in Feldern der Kopfdaten der Nachricht und der Verschlüsselung des Textkörpers der Nachricht eine Kopie der Nachricht und eine Trägernachricht erzeugt und diese Kopie der Nachricht zusammen mit dem ersten Hashwert gemäß dem ersten Algorithmus als Anhang der Trägernachricht an den Sender übermittelt wird.

3. Verfahren nach einem der Ansprüche 1 und 2,
**dadurch gekennzeichnet,**
**dass** das Kommunikationssystem nach der Übermittelung der Nachricht an eine nächste Verarbeitungskomponente innerhalb des Kommunikationssystems eine Versandbestätigung erzeugt, wobei das Kommunikationssystem den weiteren Hashwert gemäß dem zweiten Algorithmus über wenigstens zwei Felder der Kopfdaten und den verschlüsselten Textkörper der verschlüsselten Nachricht bildet und den zur Bildung des weiteren Hashwerts verwendeten zweiten Algorithmus sowie die benötigten Parameter in den Kopfdaten der verschlüsselten Nachricht hinterlegt, und die Versandbestätigung wenigstens den ersten Hashwert und den aktuell gebildeten weiteren Hashwert umfasst.

4. Verfahren nach Anspruch 3,
**dadurch gekennzeichnet,**
**dass** die Versandbestätigung signiert und als signiertes Dokument an den Sender übermittelt wird.

5. Verfahren nach einem der Ansprüche 1 bis 4,
**dadurch gekennzeichnet,**
**dass** das Kommunikationssystem nach der Übermittelung der Nachricht an den Empfänger eine Zustellbestätigung erzeugt, wobei das Kommunikationssystem aus der übermittelten Nachricht den zweiten Algorithmus und die erforderlichen Parameter zur Bildung des weiteren Hashwerts gemäß dem zweiten Algorithmus ausliest und gemäß diesem zweiten Algorithmus und der erforderlichen Parameter erneut einen aktuellen weiteren Hashwert über wenigstens zwei Felder der Kopfdaten und den Textkörper der übermittelten Nachricht bildet, und die Zustellbestätigung wenigstens den ersten Hashwert und den aktuell gebildeten weiteren Hashwert umfasst.

6. Verfahren nach Anspruch 5,
**dadurch gekennzeichnet,**
**dass** die Zustellbestätigung signiert und als signiertes Dokument an den Sender übermittelt wird.

7. Verfahren nach einem der Ansprüche 1 bis 6,
**dadurch gekennzeichnet,**
**dass** die Annahme oder Ablehnung der Nachricht durch den Empfänger ein Annahme- oder Ablehnungssignal an das Kommunikationssystem auslöst, welches daraufhin eine Annahme- oder Ablehnungsbestätigung erzeugt, wobei das Kommunikationssystem aus der angenommenen oder abgelehnten Nachricht den zweiten Algorithmus und die erforderlichen Parameter zur Bildung des weiteren Hashwerts gemäß dem zweiten Algorithmus ausliest und gemäß diesem zweiten Algorithmus und der erforderlichen Parameter erneut einen aktuellen weiteren Hashwert über wenigstens zwei Felder der Kopfdaten und den Textkörper der angenommene oder abgelehnten Nachricht bildet, und die Annahme- oder Ablehnungsbestätigung wenigstens den ersten Hashwert und den aktuell gebildeten weiteren Hashwert umfasst.

8. Verfahren nach Anspruch 7,
**dadurch gekennzeichnet,**
**dass** die Annahme- oder Ablehnungsbestätigung signiert und als signiertes Dokument an den Sender übermittelt wird.

9. Verfahren nach einem der Ansprüche 1 bis 8,
**dadurch gekennzeichnet,**
**dass** der weitere Hashwert gemäß dem zweiten Algorithmus wenigstens über das Feld der Kopfdaten gebildet wird, welches den ersten Hashwert gemäß dem ersten Algorithmus enthält.

10. Verfahren nach einem der Ansprüche 1 bis 9,
**dadurch gekennzeichnet,**
**dass** der weitere Hashwert gemäß dem zweiten Algorithmus wenigstens über das Feld der Kopfdaten gebildet wird, welches die Signatur des ersten Hashwerts gemäß dem ersten Algorithmus enthält.

11. Verfahren nach einem der Ansprüche 1 bis 10,
**dadurch gekennzeichnet,**
**dass** nach der Signierung des ersten Hashwerts gemäß dem ersten Algorithmus das für diese Signierung verwendete Zertifikat in einem Feld der Kopfdaten der Nachricht hinterlegt wird und der weitere Hashwert gemäß dem zweiten Algorithmus wenigstens über das Feld der Kopfdaten gebildet wird, welches dieses Zertifikat enthält.

12. Verfahren nach einem der Ansprüche 1 bis 11,
**dadurch gekennzeichnet,**
**dass** der Textkörper der Nachricht mit einem zufälligen symmetrischen Schlüssel des Kommunikationssystems verschlüsselt wird, dieser zufällige symmetrische Schlüssel des Kommunikationssystems mit wenigstens einem öffentlichen Schlüssel verschlüsselt wird und der verschlüsselte symmetrische Schlüssel in die Nachricht integriert wird.

13. Verfahren nach Anspruch 12,
**dadurch gekennzeichnet,**
**dass** der zufällige symmetrische Schlüssel des Kommunikationssystems mit wenigstens einem öffentlichen Schlüssel des gleichen Kommunikationssystems verschlüsselt wird.

14. Verfahren nach Anspruch 12,
**dadurch gekennzeichnet,**
**dass** der zufällige symmetrische Schlüssel des Kommunikationssystems mit wenigstens einem öffentlichen Schlüssel eines anderen Kommunikationssystems verschlüsselt wird.

15. Kommunikationssystem zur Übermittelung einer elektronischen Nachricht von einem Sender zu einem Empfänger,
**dadurch gekennzeichnet,**
**dass** es computerprogrammierte Komponenten und Mittel aufweist, die dazu ausgebildet sind, das Verfahren nach einem der Ansprüche 1 bis 14 durchzuführen.
